Europäisches Patentamt

European Patent Office

Office européen des brevets

(11) Veröffentlichungsnummer: **0 301 320**
**A1**

## EUROPÄISCHE PATENTANMELDUNG

(21) Anmeldenummer: **88111254.4**

(22) Anmeldetag: **13.07.88**

(51) Int. Cl.4: **H01S 3/139**

(30) Priorität: **27.07.87 DE 3724848**

(43) Veröffentlichungstag der Anmeldung:
**01.02.89 Patentblatt 89/05**

(84) Benannte Vertragsstaaten:
**DE FR GB IT**

(71) Anmelder: **Siemens Aktiengesellschaft Berlin und München**
**Wittelsbacherplatz 2**
**D-8000 München 2(DE)**

(72) Erfinder: **Berenbrock, Götz, Dipl.-Ing.**
**Hagener Strasse 261**
**D-5820 Gevelsberg(DE)**
Erfinder: **Schlemmer, Bernd, Dipl.-Ing.**
**Teichstrasse 20 a**
**D-5820 Gevelsberg(DE)**

(54) **Gaslaseranordnung.**

(57) Eine Frequenzregelung einer Gaslaseranordnung mit einer Laserröhre, in der zwei bezüglich der Frequenz benachbarte Longitudinalmoden der Laserschwingung angeregt werden, wird erreicht, indem ein aus den beiden Longitudinalmoden gebildetes Zwischenfrequenzsignal (fi) mit einer Referenzfrequenz (11) verglichen und auf einem vorbestimmten Frequenzwert gehalten wird. Die Erfindung eignet sich insbesondere für HeNe-Laser mit hoher Konstanz der Laserfrequenz.

## FIG 4

EP 0 301 320 A1

## Gaslaseranordnung.

Die vorliegende Erfindung betrifft eine Gaslaseranordnung gemäß dem Oberbegriff des Patentanspruchs 1. Eine derartige Gaslaseranordnung mit Frequenzregelung ist aus den Tagungsunterlagen des sechsten Europäischen Symposiums über Optoelectronic, Paris 1986, Seiten 420 und 421 bekannt. Dort werden zwei Longitudinalmoden einer Laserschwingung angeregt und das Zwischenfrequenzsignal, das auf einem Lichtempfänger entsteht, auf eine Frequenzkontrolleinheit geschaltet, welche einen Amplitudendiskriminator enthält. Dieser Amplitudendiskriminator regelt über ein Stellglied zur Veränderung der optischen Länge des Resonators bei einer konstanten Meßfrequenz einen Amplitudenwert konstant, der im steilen Ast der Kurve der Intensität des Zwischenfrequenzsignales über der Frequenz liegt. Dadurch wird die Laserfrequenz stabilisiert. Diese Frequenzstabilisierung ist jedoch empfindlich gegen Amplitudenschwankungen der beiden Longitudinalmoden, die sich in Leistungsschwankungen des Zwischenfrequenzsignales übertragen und je nach Phasenlage der beiden Moden zueinander erhebliche Werte annehmen können.

Die Aufgabe, die der vorliegenden Erfindung zugrundeliegt, besteht in der Frequenzstabilisierung von Gaslasern, in denen zwei Longitudinalmoden zu Schwingungen angeregt werden, ohne eine Störung durch Amplitudenschwankungen. Diese Aufgabe wird in einer Gaslaseranordnung gemäß dem Oberbegriff durch die kennzeichnenden Merkmale des Patentanspruchs 1 gelöst.

Die vorliegende Erfindung nützt den aus der Zeitschrift für Physik 206, 446 bis 456 (1967) bekannten Effekt aus, daß im Bereich einer Spetrallinie im Lasermedium sich ein Gebiet von anomaler Dispersion befindet, das heißt, daß sich im Fall von Laserstrahlung der Brechungsindex in diesem Bereich mit der Frequenz schnell erhöht und daß dadurch die Laserfrequenzen, die außerhalb des Bereiches der maximalen Verstärkung dieser Spektrallinie liegen, zu diesem Bereich maximaler Verstärkung hin verschoben werden. Dieser Effekt ist gemäß S.447 dieser Literaturstelle als "frequency pulling effect" bekannt.

Die genannte Frequenzänderung läßt sich mit geringem Aufwand aus dem Zwischenfrequenzsignal ermitteln, welches sich entsprechend verändert, wenn die Resonatorlänge um Bruchteile der Wellenlänge des entsprechenden Laserlichtes verändert wird. Die Veränderung der Zwischenfrequenz mit der Resonatorlänge ist in hohem Maße konstant und eignet sich gemäß der Erfindung für eine sehr genaue Konstanthaltung der Laserfrequenz. Der gut nutzbare Frequenzbereich liegt um etwa 100kHz und ist damit durch relativ kostengünstige Auswertschaltungen zu beherrschen.

Dabei wird der Resonator vorteilhaft so dimensioniert, daß eine erste Longitudinalmode der Laserschwingung im Frequenzbereich der Anstiegsflanke der Verstärkungskurve liegt, daß ihre Schwingung gerade noch gewährleistet ist und daß die zweite Longitudinalmode der Laserschwingung im Mittelbereich der Kurve der Laserverstärkung über der Frequenz liegt und gegenüber dem Maximum dieser Kurve zu höheren Frequenzen hin verschoben ist. Bei dieser Dimensionierung wir durch die erste, zur Steuerung dienende Laserlinie nur wenig Energie verbraucht, so daß die zweite, zur Auswertung kommende Laserlinie mit sehr hoher Energie zur Verfügung steht und durch die erste Linie nicht mehr nennenswert gestört wird.

Zur Steuerung ist nur relativ wenig Energie erforderlich, so daß es ausreicht, wenn die durch den dichten, "undurchlässigen" Spiegel hindurchtretende Laserstrahlung zur Frequenzregelung ausgenutzt wird. Dabei steht die volle Laserleistung für die vorgesehenen Anwendungen zur Verfügung und Störungen durch Abzweigung von Laserlicht treten nicht auf. Auch kann die Anordnung der Schaltung relativ einfach und platzsparend gestaltet werden.

Die Erfindung wird nun anhand von sechs Figuren näher erläutert.

Fig. 1 zeigt das Diagramm der Laserverstärkung G über der Frequenz f.

Fig. 2 zeigt die Abhängigkeit des Brechungsindexes n von der Frequenz f im Bereich einer Laserresonanz.

Fig. 3 zeigt die Änderung der Zwischenfrequenz $\Delta f$ über der Änderung der Länge $\Delta l$ des Resonators,

die Fig. 4 und 5 zeigen Blockschaltbilder von zwei bevorzugten Frequenzregelschaltungen gemäß der Erfindung.

Fig. 6 zeigt die Verstärkungskurve G über f und die Lage der Longitudinalmoden einer gemäß der Erfindung im bevorzugten Arbeitspunkt stabilisierten Frequenzregelschaltung.

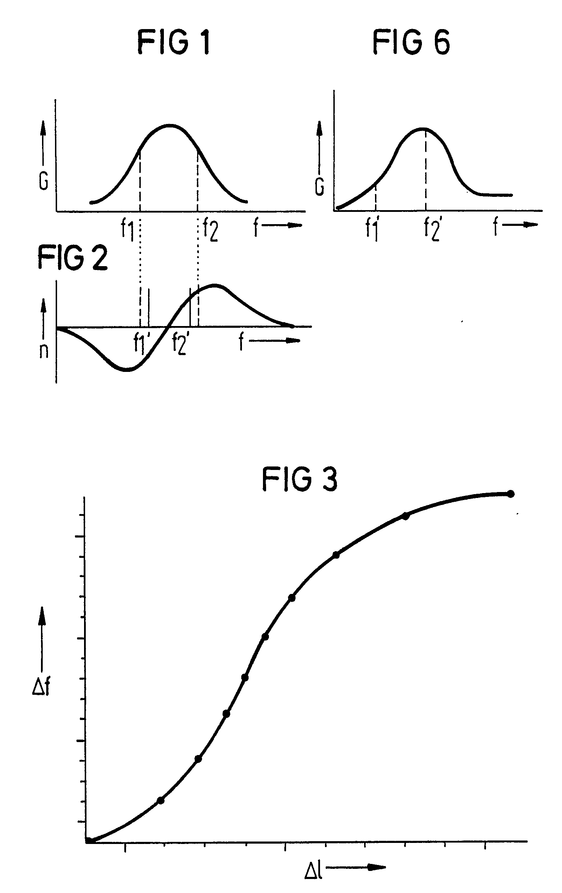

Die Verstärkung einer Laserentladung folgt in der Nähe einer Laserresonanz einer Gaußschen Verteilungskurve, wie in Fig. 1 dargestellt. Die Gaußsche Verteilungskurve der Verstärkung kann eine unterschiedliche Anzahl von Schwingungen in verschiedenen Longitudinalmoden erfassen und verstärken, wie durch die Schwingungsfrequenzen $f_1$ und $f_2$ angedeutet ist. Die Zahl der angeregten Schwingungsmoden hängt unter anderem von der optischen Länge des Resonators ab, da die Laserschwingungen ihre Frequenz, wenn auch nur in einem sehr geringen Bereich, ändern können. Innerhalb dieser zulässigen Frequenzänderung können also Laserschwingungen mit unterschiedlichen optischen Schwingungsfrequenzen angeregt werden. Aufgrund dessen kann die durch das Lasergas und den Laseraufbau bestimmte Abhängigkeit der Verstärkung G von der Frequenz f (Fig. 1) bei einer entsprechend großen Zahl von Laserschwingungen innerhalb der Resonatorlänge gleichzeitig zwei oder mehr Laserlinien erfassen und somit den Laser in verschiedenen Frequenzen schwingen lassen. Dieser Effekt führt zu einer Frequenzinstabilität, die für besonders hohe Anforderungen an die Frequenzstabilität stört und beseitigt werden soll.

Fig. 2 zeigt den Verlauf des Brechungsindex n über der Frequenz f im Bereich einer Laserlinie mit der in Fig. 1 dargestellten Verstärkungskurve. Der Brechungsindex n zeigt hierbei den bekannten Effekt der anomalen Dispersion, welcher in einem Laser zu einem kräftigen Anstieg des Brechungsindex n im Bereich der maximalen Verstärkung führt. Infolge dieses Verlaufes des Brechungsindex n wird die im Bereich der gezeigten Absenkung von n liegende Longitudinalmode der Laserschwingung entsprechend $f_1$ im Diagramm nach rechts zu $f'_1$ verschoben und die im Bereich der Überhöhung des Brechungsindex n liegende Longitudinalmode entsprechend der Frequenz $f_2$ nach links zur Position $f'_2$. Dieser Effekt ist aus der Literatur, beispielsweise aus Zeitschrift für Physik 206, 446 - 456 (1967), insbesondere S.447 bekannt. Er wird als "frequency pulling effect" bezeichnet.

Gegenstand der vorliegenden Erfindung ist die Ausnutzung dieses Effektes zur Regelung der Schwingungsfrequenz des Lasers. Der Frequenzabstand $f'_2$ minus $f'_1$ verändert sich mit einer Veränderung der Resonatorlänge. Er folgt einer reproduzierbaren Kurve, wie sie beispielsweise in Fig. 3 dargestellt ist. Dabei liegt der Ursprung der Koordinaten in der Fig. 3 bei einer Resonatorlänge, bei der die erste Longitudinalmode $f'_1$ der Laserschwingung gerade meßbar zu schwingen beginnt.

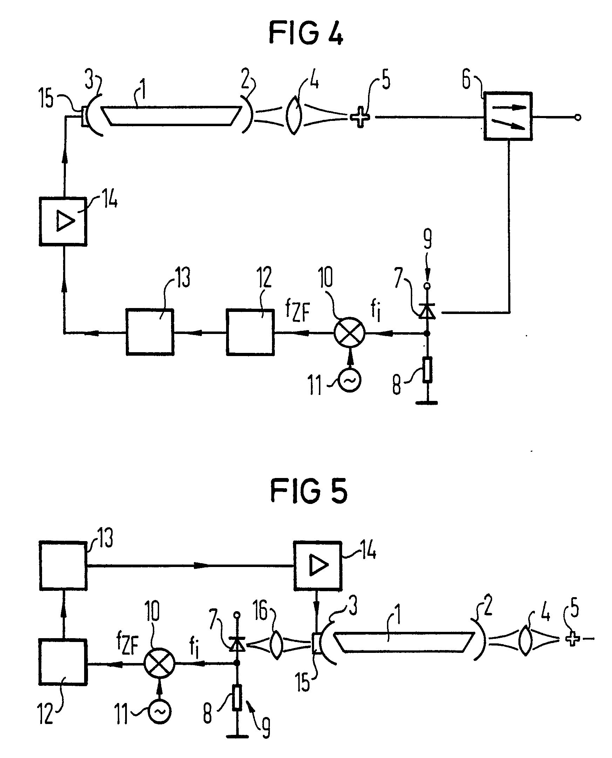

Dieses Meßprinzip wird erfindungsgemäß in einer Schaltung gemäß einer der Figuren 4 oder 5 verwirklicht. Ein Laser 1 mit Resonatorspiegeln 2 und 3 sendet sein Laserlicht über eine fokussierende Optik 4 auf eine Glasfaser 5. In einem Faserrichtkoppler 6 für das Laserlicht wird ein kleiner Teil desselben abgezweigt und einem Fotoempfänger 9 zugeführt. Der Fotoempfänger 9 besteht zweckmäßigerweise aus einer Fotodiode 7 und einem Widerstand 8. Die Fotodiode 7 spricht auf die Differenzfrequenzen zwischen zwei benachbarten Longitudinalmoden der Laserschwingung an, nicht aber auf die Schwingungsfrequenz des Lasers selbst. Sie wandelt daher das Differenzsignal zwischen den beiden Longituditudinalmoden in ein elektrisches Signal um und führt es dem Mischer 10 zu. Der Mischer 10 ist mit einer Referenzfrequenzquelle 11 verbunden, mischt die beiden Signale und führt sie als Zwischenfrequenz $f_{ZF}$ einem Frequenzdiskriminator 12 zu. Dies steuert über einen Proportionalintegralregler 13 und einen Verstärker 14 ein Stellglied 15, welches vorzugsweise als Piezoversteller ausgebildet ist. Die Schaltung hält die Differenz frequenz auf einem vorgegebenen Arbeitspunkt der Kurve gemäß Fig. 3, indem sie die optische Länge des Resonators regelt. Die Schaltung gemäß Fig. 5 enthält denselben Regelkreis wie die von Fig. 4, verwendet jedoch das Restlicht, welches durch den dichten, "undurchlässigen" Spiegel rückseitig austritt und führt dieses Licht über eine gesonderte Linse 16 dem Strahlungsempfänger 9 zu. Dort wird der Faserrichtkoppler 6 eingespart und insbesondere der Strahlengang des zu nutzenden Laserstrahles nicht gestört und nicht geschwächt.

Fig. 6 zeigt den optimalen Arbeitspunkt der Schaltungen gemäß den Figuren 4 oder 5. Die erste Longitudinalmode $f'_1$ der Laserschwingung liegt im ansteigenden Bereich der Verstärkungskurve G über f so, daß die Laserschwingung sicher aufrechterhalten bleibt. Die zweite Longitudinalmode $f'_2$ liegt in der Nähe des Maximums der Verstärkungskurve G über f auf der Seite zu höheren Freqnenzen hin. Dadurch ist einerseits eine hohe Verstärkung dieser Longitudinalmode gewährleistet, die erste Longitudinalmode somit unschädlich gemacht und andererseits gewährleistet, daß nicht etwa eine dritte Longitudinalmode anschwingt.

## Ansprüche

1. Gaslaseranordnung, welche eine Laserröhre, einen optischen Resonator und eine Regelschaltung zur Stabilisierung der Frequenz der Laserstrahlung enthält, wobei ein Teil des Laserlichtes der Regelschaltung zugeführt wird und wobei der Laserresonator so dimensioniert ist, daß er zwei bezüglich der Frequenz benachbarte Longitudinalmoden der Laserschwingung anregen kann, wobei ein aus den beiden Longitudinalmoden gebildetes Zwischenfrequenzsignal auf einen Fotoempfänger trifft, der auf eine Frequenzkontrolleinheit geschaltet ist, wobei ein Regelsignal einem Stellglied zur Veränderung der optischen Länge des Resonators zugeführt wird, **gekennzeichnet durch** die folgenden Schaltverbindungen:

a) der Fotoempfänger ist auf einen Frequenzmischer,

b) ein Referenzsignalgeber ist auf den Frequenzmischer,

c) das Ausgangsignal des Frequenzmischers ist auf einen Frequenzdiskriminator,

d) der Ausgang des Frequenzdiskriminators ist auf das Stellglied geschaltet.

2. Gaslaseranordnung nach Anspruch 1.**dadurch gekennzeichnet**, daß der Resonator so dimensioniert ist, daß eine erste Longitudinalmode ($f_1$) der Laserschwingung im Bereich der Anstiegsflanke der Verstärkungskurve (G über f) des Lasers liegt, daß ihre Schwingung noch gewährleistet ist und daß die zweite Longitudinalmode ($f_2$) der Laserschwingung im Mittelbereich der Kurve der Laserverstärkung (G) über der Frequenz (f) gegenüber dem Maximum dieser Kurve zu höheren Frequenzen hin verschoben liegt.

3. Gaslaseranordnung nach einem der Ansprüche 1 oder 2, **dadurch gekennzeichnet**, daß dem Fotoempfänger als Regelsignal Restlicht, welches den dichten Spiegel durchdringt, zugeführt wird.

## FIG 1

## FIG 6

## FIG 2

## FIG 3

## FIG 4

## FIG 5

Europäisches
Patentamt

**EUROPÄISCHER RECHERCHENBERICHT**

Nummer der Anmeldung

EP 88 11 1254

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 6, Nr. 189 (E-133)[1067], 28. September 1982, Seite 128 E 133; & JP-A-57 103 380 (FUJITSU K.K.) 26-06-1982 * Insgesamt * --- | 1 | H 01 S 3/139 |
| A | US-A-3 747 004 (SASNETT) * Figur 1; Anspruch 1 * --- | 1 | |
| D,A | ZEITSCHRIFT FÜR PHYSIK, Band 206, 1967, Seiten 446-456, Berlin, DE; G. HERZIGER et al.: "Dynamische Eigenschaften von Laser-Oszillatoren. I" * Figuren 1,2,7 * ----- | 1 | |
| | | | **RECHERCHIERTE SACHGEBIETE (Int. Cl.4)** |
| | | | H 01 S |

Der vorliegende Recherchenbericht wurde für alle Patentansprüche erstellt

| Recherchenort | Abschlußdatum der Recherche | Prüfer |
|---|---|---|
| DEN HAAG | 31-10-1988 | FARNESE G.P. |